# FASCICULE DE BREVET EUROPEEN

(11) **EP 2 502 059 B1**
(45) Date de publication et mention de la délivrance du brevet: **03.04.2019**
(21) Numéro de dépôt: 10798172.2
(22) Date de dépôt: 17.11.2010
(51) Int. Cl.: G01N 27/404

(54) **MÉTHODE DE DOSAGE DES NITRATES ET/OU DES NITRITES EN MILIEU NEUTRE**
VERFAHREN ZUM DOSIEREN VON NITRATEN UND/ODER NITRITEN IN NEUTRALEM MILIEU
METHOD OF DOSING NITRATES AND/OR NITRITES IN NEUTRAL ENVIRONMENT

(30) Priorité: 19.11.2009 FR 0958178
(43) Date de publication de la demande: 26.09.2012
(73) Titulaire: Centre National de la Recherche Scientifique, 75016 Paris (FR)
(72) Inventeur: DEBIEMME, Catherine, F-94100 Saint Maur (FR); CACHET, Hubert, F-75017 Paris (FR); TRONG LONG, Thi Tuyet Maï, F-93170 Bagnolet (FR); AOUINA, Nizar, F-94300 Vincennes (FR)
(74) Mandataire: Lavoix
(86) Numéro de dépôt international: PCT/FR2010/052438
(87) Numéro de publication internationale: WO 2011/061441

(56) Documents cités:
- KARIM-NEZHAD G ET AL: "Copper (hydr)oxide modified copper electrode for electrocatalytic oxidation of hydrazine in alkaline media", ELECTROCHIMICA ACTA, ELSEVIER SCIENCE PUBLISHERS, BARKING, GB LNKD- DOI:10.1016/J.ELECTACTA.2009.05.019, vol. 54, no. 24, 1 octobre 2009 (2009-10-01), pages 5721-5726, XP026236165, ISSN: 0013-4686 [extrait le 2009-05-14]
- ALJAZ COH ET AL: "The effect of surface preparation of a copper electrode on the reduction of nitrate ions", ACTA CHIMICA SLOVENICA, SLOVENSKO KEMIJSKO DRUSTVO, LJUBLJANA, SI, vol. 43, 1 janvier 1996 (1996-01-01), pages 5-12, XP009127946, ISSN: 1318-0207
- BIAGIOTTI ET AL: "Synthesis and characterization of polymeric films and nanotubule nets used to assemble selective sensors for nitrite detection in drinking water", SENSORS AND ACTUATORS B, ELSEVIER SEQUOIA S.A., LAUSANNE, CH LNKD- DOI:10.1016/J.SNB.2006.05.024, vol. 122, no. 1, 21 février 2007 (2007-02-21), pages 236-242, XP005897245, ISSN: 0925-4005

## Description

La présente invention se rapporte à une méthode de dosage des ions nitrate et/ou nitrite en solution de pH sensiblement neutre.

Elle s'applique typiquement, mais non exclusivement, à l'utilisation d'une électrode de cuivre pour le dosage potentiostatique des ions nitrate et/ou nitrite en milieu aqueux de pH sensiblement neutre.

De nombreuses méthodes pour doser quantitativement les ions nitrate et/ou nitrite sont connues, notamment à pH fortement acide. On peut citer par exemple le document intitulé « The effect of surface preparation of a copper electrode on the reduction of nitrate ions » de Aljaz Coh et Boris Pihlar (Acta Chimica Slovenia 43/1/1996, pp. 5-12). Ce document présente une méthode de dosage des ions nitrate à l'aide d'une électrode de cuivre.

Cette méthode de dosage comprend une première étape consistant à appliquer un potentiel compris entre 0 et 0,2 V *vs.* Ag/AgCl à l'électrode de cuivre pendant un temps déterminé de sorte à oxyder le cuivre métallique de ladite électrode et à former ainsi une couche d'oxyde de cuivre, et une seconde étape consistant à doser, par réduction, les ions nitrate en effectuant un balayage du potentiel appliqué (dosage dit « en mode potentiodynamique ») à l'électrode de cuivre, les première et seconde étapes étant effectuées en milieu fortement acide dans une solution du type 0,1 M HClO₄/0,9 M NaClO₄. D'ailleurs, même si ce document mentionne qu'une couche d'oxyde de cuivre se forme, il est difficilement envisageable qu'en milieu fortement acide, la couche d'oxyde de cuivre puisse exister.

Le tracé de la courbe de l'intensité en fonction du potentiel appliqué à l'électrode de cuivre permet alors d'identifier le pic de courant dû à la réduction des ions nitrate en ions NH₄⁺, et d'en déduire ainsi la concentration en ions nitrate par étalonnage dans le milieu aqueux acidifié.

En outre, selon cette méthode, il est préférable d'ajouter dans le milieu acide à analyser des ions Cu²⁺ afin de catalyser la réduction des ions nitrate lors de l'étape de dosage.

Toutefois, lors de la mise en oeuvre de cette méthode de dosage en mode potentiodynamique, c'est-à-dire avec un balayage progressif du potentiel appliqué à l'électrode de cuivre, on observe une diminution progressive du courant mesuré due à un empoisonnement de l'électrode, et il est donc impossible de faire des mesures reproductibles les unes à la suite des autres.

De plus, la mesure de la concentration en ions nitrate ne peut être effectuée de façon techniquement simple puisque la variation du potentiel avec une vitesse donnée, en mode potentiodynamique, implique l'utilisation d'appareillages électroniques relativement complexes.

En outre, par cette méthode, il n'est pas possible de doser les ions nitrate dans un milieu naturel non modifié car il est nécessaire d'ajouter au milieu à analyser un acide fort, voire des ions Cu²⁺.

Enfin, les mesures en milieu acide sont limitées puisqu'elles ne permettent pas d'observer la réduction des ions nitrite. En effet, lorsque le milieu est acidifié, les ions nitrite initialement présents dans le milieu sont sous forme d'acide nitreux (HNO₂, pKa=3,3). L'acide nitreux est instable et se dismute alors en nitrates et NO.

On peut également citer le document G. Karim-Nezhad et al. intitulé : « Copper (hydr)oxide modified copper electrode for electrocatalytic oxidation of hydrazine in alkaline média », qui décrit la modification de la surface d'une électrode de cuivre, en mode potentiodynamique, pour oxyder de façon électrocatalytique l'hydrazine.

Le but de la présente invention est de pallier les inconvénients des techniques de l'art antérieur en proposant notamment une méthode de dosage simple et directe des ions nitrate et/ou nitrite permettant de garantir des mesures reproductibles et fiables, quel que soit le nombre de dosages à effectuer, sans qu'il soit nécessaire d'ajouter un quelconque additif dans la solution à analyser, notamment pour en modifier le pH.

La présente invention a pour objet une méthode de dosage des ions nitrate et/ou nitrite en solution utilisant une électrode de cuivre, caractérisée en ce qu'elle est réalisée en mode potentiostatique, et qu'elle comprend les étapes consistant à :
i. appliquer un premier potentiel à l'électrode de cuivre de sorte à réduire les oxydes de cuivre présents à la surface de l'électrode en cuivre métallique (Cu⁰),
ii. appliquer un second potentiel à l'électrode de cuivre de sorte à oxyder le cuivre métallique formé à l'étape i en ions cuivriques (Cu²⁺), des oxydes de cuivre pouvant éventuellement se former lors de l'étape ii,
iii. appliquer un troisième potentiel à l'électrode de cuivre de sorte à réduire les oxydes de cuivre éventuellement formés à l'étape ii, les étapes i à iii étant réalisées par immersion de l'électrode de cuivre dans un électrolyte support, l'électrolyte support étant de préférence un électrolyte support aqueux, et
iv. doser les ions nitrate et/ou nitrite d'une solution à analyser, par immersion de l'électrode de cuivre obtenue à l'étape iii dans ladite solution à analyser, en appliquant un quatrième potentiel à l'électrode de cuivre de sorte à réduire les ions nitrate et/ou nitrite,
l'électrolyte support des étapes i à iii, ainsi que la solution à analyser de l'étape iv ayant un pH sensiblement neutre.

On entend par les termes « sensiblement neutre », une solution (ou un électrolyte) dont le pH est proche de la neutralité, c'est-à-dire pouvant aller de 5 à 9, et de préférence environ égal à 7. A titre d'exemple, la solution à analyser peut être un milieu aqueux tel qu'une eau naturelle ou une eau usée.

Ainsi, la méthode de dosage selon l'invention, qui est une méthode électrochimique, permet avantageusement de réaliser le dosage direct des ions nitrate et/ou nitrite éventuellement présents dans toute solution, sans qu'il soit nécessaire d'ajouter à ladite solution des composés additionnels (ou additifs), tels que par exemple un acide fort pour en abaisser le pH, des ions cuivriques (Cu²⁺) pour catalyser la réduction des ions nitrate lors de l'étape de dosage, des solutions tampons, ....

On entend par l'expression « électrode de cuivre » une électrode de cuivre dite « non alliée », constituée uniquement de cuivre, le cuivre pouvant être massif ou électro-déposé. Bien entendu, l'électrode de cuivre peut contenir des impuretés inévitables comme par exemple d'autres éléments métalliques. Dans ce cas, l'électrode de cuivre est composée d'au moins 99,9% en poids de cuivre, le reste étant lesdites impuretés inévitables.

Les étapes i à iii sont dites « étapes de conditionnement » de l'électrode, préalables à l'étape iv de dosage proprement dite. Ces étapes de conditionnement, consistant à appliquer à l'électrode de cuivre une séquence de trois potentiels successifs en mode potentiostatique, permettent avantageusement d'obtenir une surface de l'électrode constituée essentiellement de cuivre à l'état d'oxydation 0 et donc exempte d'oxyde de cuivre, afin d'avoir une surface active constante et reproductible.

Ces étapes i à iii de conditionnement sont réalisées dans l'électrolyte support, ce dernier pouvant avantageusement être la solution à analyser de l'étape iv. Dans ce cas, on parle de conditionnement et de dosage réalisés *in situ,* au sein de la même solution de pH sensiblement neutre.

L'étape iv de dosage est un dosage dit « en mode potentiostatique » (ou « en mode ampérométrique »). Ce type de dosage est bien connu et consiste à mesurer l'intensité du courant, qui est fonction de la concentration en ions nitrate et/ou nitrite, à un potentiel donné (i.e. quatrième potentiel).

Le mode potentiostatique utilisé dans les étapes i à iv permet avantageusement d'appliquer un potentiel constant pendant un temps déterminé, ce qui est techniquement beaucoup plus simple que de faire varier ce potentiel avec une vitesse donnée tel qu'en mode potentiodynamique.

Grâce à l'invention, la concentration en ions nitrate et/ou nitrite présente dans la solution à analyser est proportionnelle à l'intensité mesurée au potentiel (i.e. quatrième potentiel) appliqué à l'électrode de cuivre conditionnée. Ce dosage potentiostatique permet ainsi d'obtenir facilement la concentration en ions nitrate et/ou nitrite. Plus particulièrement, à un quatrième potentiel donné, on obtient soit la concentration en ions nitrate, soit la concentration en ions nitrate et en ions nitrite.

Le dosage potentiostatique selon l'invention est donc bien différent du dosage potentiodynamique (voltamétrie cyclique) dans lequel le potentiel appliqué à l'électrode de cuivre varie en fonction du temps (balayage en potentiel).

Dans la méthode de dosage de l'invention, le premier potentiel permet de réduire les oxydes de cuivre du type CuO et/ou Cu₂O en cuivre métallique, lesdits oxydes de cuivre provenant notamment de l'oxydation du cuivre métallique par l'oxygène de l'air. Le premier potentiel est donc de type cathodique, il doit permettre la réduction de tous les oxydes de cuivre.

Typiquement, il peut être inférieur ou égal à -0,85 V par rapport à une électrode de référence du type électrode au calomel saturée (i.e. électrode au calomel saturée en KCl), notée dans la suite de la description « ECS », et de préférence égal à -1,15 V/ECS. Idéalement, la durée d'application du premier potentiel peut être d'au moins de quelques secondes, et par exemple comprise entre 20 et 30 secondes.

Les demi-équations électrochimiques de la réduction des oxydes de cuivre sont les suivantes :

CuO + 2e⁻ + H₂O → Cu⁰ + 2OH⁻

Cu₂O + 2e⁻ + H₂O → 2Cu⁰ + 2OH⁻

Le second potentiel permet d'oxyder le cuivre métallique formé à l'étape i en ions cuivriques (Cu²⁺). Le second potentiel est donc de type anodique.

Typiquement, le second potentiel peut être supérieur au potentiel de repos de l'électrode de cuivre, notamment supérieur de 5 à 200 mV par rapport audit potentiel de repos, et de préférence supérieur de 5 à 100 mV par rapport audit potentiel de repos.

Un second potentiel supérieur de plus de 200 mV par rapport au potentiel de repos ne serait pas nécessairement acceptable du fait qu'il pourrait induire une dissolution trop importante du cuivre métallique et de ce fait la surface active de l'électrode deviendrait inhomogène comme expliqué ci-après.

Le potentiel de repos correspond au potentiel de circuit ouvert ou, en d'autres termes, au potentiel « naturel » mesuré quand l'électrode de cuivre n'est soumise à l'application d'aucun potentiel. Ce potentiel de repos est donc classiquement mesuré entre l'électrode de cuivre et une électrode de référence, par exemple de type ECS, sans qu'aucun potentiel ne soit appliqué entre ces deux électrodes. A titre d'exemple, le potentiel de repos de l'électrode de cuivre peut être environ égal à -0,10 V/ECS.

Plus particulièrement, lorsque le potentiel de circuit ouvert est de -0,100 V/ECS, le second potentiel peut être supérieur ou égal à -0,095 V/ECS et inférieur ou égal à 0,100 V/ECS, et de préférence inférieur ou égal à 0,000 V/ECS.

Idéalement, la durée d'application du second potentiel peut être d'au moins de quelques secondes, et par exemple comprise entre 20 et 30 secondes.

La demi-équation électrochimique de l'oxydation du cuivre métallique est la suivante :

Cu⁰ → Cu²⁺ + 2e⁻

Lors de l'application du second potentiel, des oxydes de cuivre, tels que par exemple du CuO et/ou du Cu₂O, peuvent éventuellement se former.

La réduction des oxydes de cuivre à l'étape i peut conduire à la formation de cuivre divisé (ou cuivre non compact) sur la surface de l'électrode de cuivre, ce qui entraîne une inhomogénéité de surface (rugosité de surface) et une augmentation de la surface active de ladite électrode. De ce fait, l'étape ii permet de garantir des mesures reproductibles les unes après les autres, garantissant une surface active qui reste constante et homogène (surface lisse) au fur et à mesure des dosages effectués.

Le troisième potentiel permet, quant à lui, de réduire les oxydes de cuivre susceptibles de s'être formés lors de l'étape ii. Le troisième potentiel est donc de type cathodique. Il peut être inférieur ou égal à -0,85 V/ECS, et de préférence égal à -1,15 V/ECS.

Idéalement, la durée d'application du troisième potentiel peut être d'au moins de quelques secondes, et par exemple comprise entre 20 et 30 secondes.

Ainsi, la combinaison des étapes i, ii et iii permet d'obtenir une électrode de cuivre dont la surface a été conditionnée et qui permet alors, lors du dosage des ions nitrate et/ou nitrite à l'étape iv, de mesurer un courant de réduction reproductible et proportionnel à la concentration en ions nitrate et/ou nitrite dans la solution à analyser.

Le quatrième potentiel permet de réduire les ions nitrate et/ou nitrite afin de les doser (i.e. détecter quantitativement). Ce quatrième potentiel est donc de type cathodique.

Les termes « ions nitrate et/ou nitrite » de l'invention désignent plus particulièrement soit les ions nitrate, soit les ions nitrate et les ions nitrite.

Selon une première variante, le quatrième potentiel est égal à environ -0,9 V/ECS pour effectuer uniquement la réduction des ions nitrate selon l'équation suivante :

NO₃⁻ + 2e⁻ + H₂O → NO₂⁻ + 2OH⁻

A ce potentiel (-0,9 V/ECS), les ions nitrate sont ainsi réduits en ions nitrite.

Selon une seconde variante, le quatrième potentiel est égal à environ -1,1 V/ECS et permet d'effectuer à la fois la réduction des ions nitrate et celle des ions nitrite, selon les équations suivantes :

NO₃⁻ + 8e⁻ + 6H₂O → NH₃ + 9OH⁻

NO₂⁻ + 6e⁻ + 5H₂O → NH₃ + 7OH⁻

La teneur en ions nitrite est ainsi obtenue facilement par différence entre l'intensité des courants obtenus à -0,9 V/ECS (cf. réduction des ions nitrate) et à -1,1 V/ECS (réduction des ions nitrite et des ions nitrate).

Selon une troisième variante, le quatrième potentiel comprend l'application du potentiel à environ -0,9 V/ECS, suivie par l'application du potentiel à environ -1,1 V/ECS.

Idéalement, la durée d'application du quatrième potentiel peut être d'au moins de quelques secondes, et par exemple comprise entre 20 et 30 secondes.

Bien entendu, l'homme du métier comprendra aisément que toutes les étapes ne peuvent être effectuées qu'en présence, en plus de l'électrode de cuivre, d'une électrode de référence, par exemple de type ECS, d'une contre-électrode, par exemple en platine ou en acier inoxydable, et d'un dispositif électronique de mesure, formant ensemble un capteur électrochimique.

Dans un mode de réalisation particulièrement préféré, les étapes i à iii sont réitérées avant chaque étape iv de dosage, permettant ainsi de réaliser des dosages en continu tout en assurant la reproductibilité des mesures et en maintenant constantes les performances de l'électrode de cuivre.

En outre, dans un mode de réalisation bien particulier, la méthode de dosage de l'invention comprend en outre une étape v faisant suite à l'étape iv de dosage, ladite étape v consistant à maintenir l'électrode de cuivre à un cinquième potentiel, ledit cinquième potentiel étant inférieur au potentiel de repos de l'électrode de cuivre, de sorte à éviter à l'électrode de cuivre de s'oxyder lorsque cette dernière n'est plus utilisée pour ledit dosage pendant une période donnée.

Le cinquième potentiel permet avantageusement d'éviter au cuivre de s'oxyder (i.e. se corroder), ce qui pourrait conduire à la formation d'un film important d'oxyde de cuivre à la surface de l'électrode de cuivre, empêchant ainsi d'obtenir des mesures reproductibles.

Comme mentionné précédemment, le potentiel de repos de l'électrode de cuivre (ou potentiel de circuit ouvert) peut être par exemple environ égal à -0,10 V/ECS.

Un autre objet de l'invention concerne une électrode de cuivre conditionnée par les étapes i à iii de la méthode de dosage telle que définie dans la présente invention. Ladite électrode de cuivre est caractérisée en ce que sa surface est essentiellement constituée de cuivre à l'état d'oxydation 0 (Cu(0)), c'est-à-dire de cuivre sous forme métallique.

On entend par le terme « essentiellement » une teneur en pourcentage atomique (%at.) de cuivre à l'état d'oxydation 0 qui est supérieure à 80 %at., et de préférence supérieure à 90% at., par rapport à la somme des teneurs en %at. de l'ensemble des constituants comprenant au moins un élément métallique, présent à la surface de l'électrode de cuivre. L'ensemble desdits constituants comprend bien entendu du cuivre sous forme métallique (Cu(0)), et peut en outre comprendre du cuivre à l'état d'oxydation +I (Cu(I)) et/ou du cuivre à l'état d'oxydation +II (Cu(II)).

Plus particulièrement, la surface de l'électrode de cuivre comprend moins de 10 %at. d'oxyde(s) de cuivre, de préférence moins de 5 % at. d'oxyde(s) de cuivre.

D'autres caractéristiques et avantages de la présente invention apparaîtront à la lumière de la description d'un exemple non limitatif de la méthode de dosage selon l'invention, fait en référence aux figures annotées, dans lesquelles :
- la figure 1 représente deux courbes de dosage des courants enregistrés à un potentiel de -0,9 V/ECS en fonction de la concentration en ions nitrate dans une solution Na₂SO₄ à 2mM avec et sans conditionnement de l'électrode de cuivre ;
- la figure 2 représente la densité de courant en fonction du temps pour le dosage des ions nitrate selon l'invention ;
- la figure 3 représente la variation de la densité de courant en fonction de la concentration en ions nitrate après conditionnement de l'électrode de cuivre à un potentiel de -0,9 V/ECS et de -1,1 V/ECS ; et
- la figure 4 représente la variation de la densité de courant en fonction de la concentration en ions nitrite après conditionnement de l'électrode de cuivre à un potentiel de -0,9 V/ECS et de -1,1 V/ECS.

### EXEMPLES

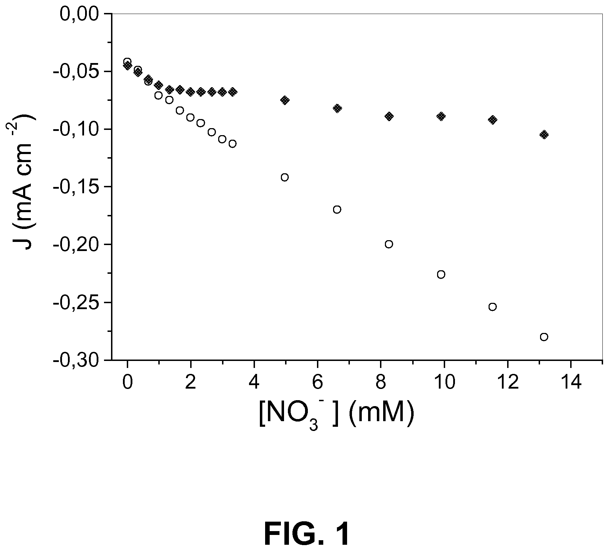

Pour obtenir les courbes de la figure 1, des mesures de la densité de courant (J) (i.e. courant mesuré par unité de surface de l'électrode de cuivre) en fonction de la concentration en ions nitrate ont été réalisées.

Pour ce faire, une électrode de cuivre a été immergée dans une solution aqueuse Na₂SO₄ à 2mM dans laquelle ont été ajoutées successivement des quantités prédéterminées d'une solution de nitrate de sodium pour faire augmenter la concentration en ions nitrate de la solution analysée.

Selon un premier essai, l'électrode de cuivre est directement polarisée dans la solution aqueuse, à un potentiel de -0,9 V/ECS. Ce potentiel permet de réduire les ions nitrate en ions nitrite. La courbe obtenue est celle représentée par la succession des points « ◆ ».

Selon un second essai, l'électrode de cuivre est tout d'abord conditionnée. Notamment, elle est conditionnée avant le premier ajout d'une quantité prédéterminée de ladite solution de nitrate de sodium ainsi qu'après chaque ajout de chaque quantité prédéterminée de ladite solution de nitrate de sodium dans la solution aqueuse, le conditionnement étant réalisé selon les étapes i à iii de l'invention aux potentiels successifs suivants :
- un premier potentiel de -1,15 V/ECS est appliqué (étape i) pendant environ 30 secondes,
- un second potentiel de 0,05 V/ECS est appliqué (étape ii) pendant environ 30 secondes, et
- un troisième potentiel de -1,15 V/ECS est appliqué (étape iii) pendant environ 30 secondes.

Puis, l'électrode ainsi conditionnée est polarisée à un quatrième potentiel (étape iv) de -0,9 V/ECS pendant environ 30 secondes.

La courbe obtenue est celle représentée par la succession des points « O ».

Lorsque l'électrode de cuivre est conditionnée entre chaque mesure, on observe clairement sur la figure 1 que la réponse obtenue est proportionnelle à la teneur en ions nitrate de la solution analysée. En effet, la relation de la densité de courant en fonction de la concentration en ions nitrate est linéaire. Ce n'est pas le cas lorsque l'électrode n'est pas conditionnée entre chaque mesure.

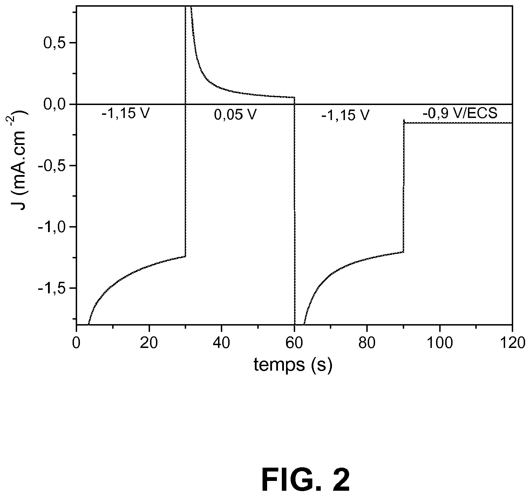

La figure 2 représente la densité de courant en fonction du temps pour le dosage des ions nitrate selon l'invention avec une solution aqueuse donnée.

L'électrode de cuivre est immergée dans une solution aqueuse comprenant 0,002M de Na₂SO₄ et 0,005M de NaNO₃.

La séquence de potentiel appliquée pour le conditionnement de l'électrode (étapes i, ii et iii) et pour le dosage des ions nitrate (étape iv) est identique à celle mentionnée pour la figure 1.

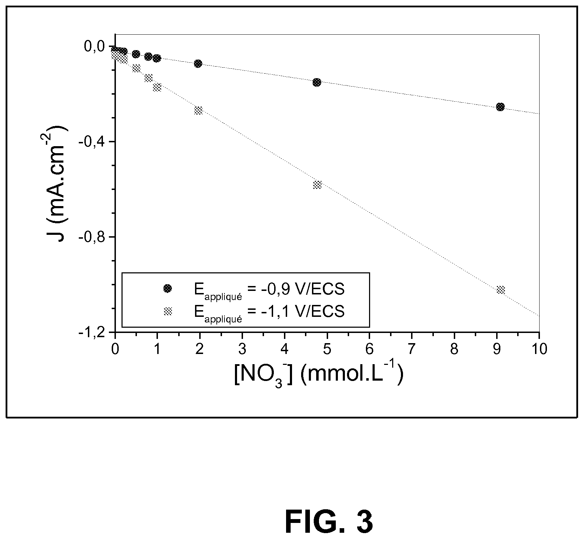

La figure 3 représente la variation de la densité de courant en fonction de la concentration en ions nitrate après conditionnement de l'électrode en appliquant la séquence de potentiel telle que mentionnée à la figure 1. Le dosage des ions nitrate est réalisé d'une part à un potentiel de -0,9 V/ECS, et d'autre part, à un potentiel de -1,1 V/ECS.

Pour ce faire, une électrode de cuivre a été immergée dans une solution aqueuse Na₂SO₄ à 2mM dans laquelle ont été ajoutées successivement des quantités prédéterminées d'une solution de nitrate de sodium pour faire augmenter la concentration en ions nitrate de la solution analysée.

La figure 3 permet d'observer la linéarité de la relation J en fonction de la concentration en ions nitrate à -0,9 V/ECS et à -1,1 V/ECS.

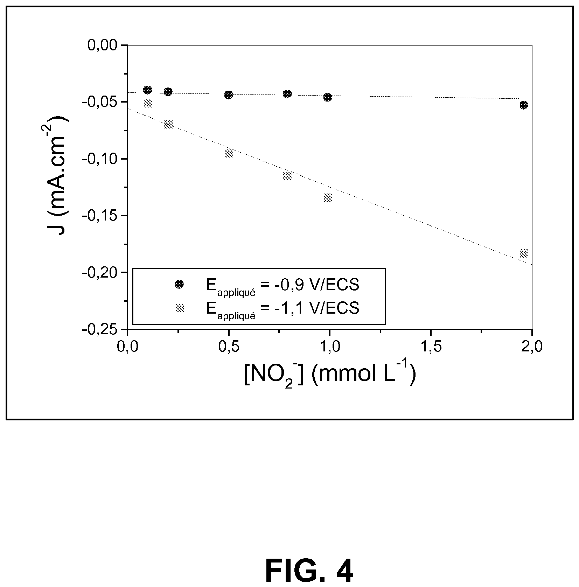

La figure 4 représente la variation de la densité de courant en fonction de la concentration en ions nitrite après conditionnement de l'électrode en appliquant la séquence de potentiel telle que mentionnée à la figure 1. Le dosage des ions nitrite est réalisé à un potentiel de -1,1 V/ECS. En outre, on vérifie qu'à -0,9V/ECS, la densité de courant ne varie pas.

Pour ce faire, une électrode de cuivre a été immergée dans une solution aqueuse Na₂SO₄ à 2mM dans laquelle ont été ajoutées successivement des quantités prédéterminées d'une solution de nitrite de sodium pour faire augmenter la concentration en ions nitrite de la solution analysée.

La figure 4 permet d'observer la linéarité de la relation J directement en fonction de la concentration en ions nitrite NO₂⁻ à -1,1V/ECS puisque la solution aqueuse ne contient pas d'ions nitrate. Dans le cas contraire, lorsque la solution aqueuse à analyser comprend des ions nitrate, la concentration en ions nitrite peut être facilement calculée en utilisant la relation suivante : J(NO₂⁻) = J(-1,1 V/ECS) - J(-0,9 V/ECS).

Par conséquent, la méthode de dosage selon l'invention incluant un conditionnement de l'électrode de cuivre préalablement au dosage, ou préalablement à chaque dosage, est une méthode simple à mettre en oeuvre qui permet d'avoir des mesures reproductibles de la concentration en ions nitrate et/ou nitrite quelle que soit la solution de pH sensiblement neutre considérée.

## Revendications

1. Méthode de dosage des ions nitrate et/ou nitrite en solution utilisant une électrode de cuivre, ladite méthode étant **caractérisée en ce qu'**elle est réalisée en mode potentiostatique, et qu'elle comprend les étapes consistant à :
i. appliquer un premier potentiel à l'électrode de cuivre de sorte à réduire les oxydes de cuivre présents à la surface de l'électrode en cuivre métallique,
ii. appliquer un second potentiel à l'électrode de cuivre de sorte à oxyder le cuivre métallique formé à l'étape i en ions cuivriques,
iii. appliquer un troisième potentiel à l'électrode de cuivre de sorte à réduire les oxydes de cuivre éventuellement formés à l'étape ii,
les étapes i et iii étant réalisées dans un électrolyte support, et
iv. doser les ions nitrate et/ou nitrite d'une solution à analyser, par immersion de l'électrode de cuivre obtenue à l'étape iii dans ladite solution à analyser, en appliquant un quatrième potentiel à l'électrode de cuivre de sorte à réduire les ions nitrate et/ou nitrite,
l'électrolyte support des étapes i à iii ainsi que la solution à analyser de l'étape iv ayant un pH sensiblement neutre.

2. Méthode selon la revendication 1, **caractérisée en ce que** l'électrolyte support des étapes i a iii est la solution à analyser de l'étape iv.

3. Méthode selon revendication 1 ou 2, **caractérisée en ce que** le premier potentiel est inférieur ou égal à -0,85 V/ECS.

4. Méthode selon l'une quelconque des revendications précédentes, **caractérisée en ce que** le second potentiel est supérieur au potentiel de repos de l'électrode de cuivre.

5. Méthode selon l'une quelconque des revendications précédentes, **caractérisée en ce que** le troisième potentiel est inférieur ou égal à -0,85 V/ECS.

6. Méthode selon l'une quelconque des revendications 1 à 5, **caractérisée en ce que** la quatrième potentiel est égal à -0,9 V/ECS.

7. Méthode selon l'une quelconque des revendications 1 à 5 **caractérisée en ce que** le quatrième potentiel est égal à -1,1 V/ECS.

8. Méthode selon l'une quelconque des revendications précédentes **caractérisée en ce que** les étapes i à iii sont réitérées avant chaque étape iv de dosage.

9. Méthode selon l'une quelconque des revendications précédentes, **caractérisée en ce qu'**elle comprend en outre une étape v faisant suite à l'étape iv de dosage, ladite étape v consistant à maintenir l'électrode de cuivre à un cinquième potentiel, ledit cinquième potentiel étant inférieur au potentiel de repos de l'électrode de cuivre, de sorte à éviter à l'électrode de cuivre de s'oxyder lorsque cette dernière n'est plus utilisée pour ledit dosage pendant une période donnée.

## Patentansprüche

1. Verfahren zum Dosieren von Nitrat- und/oder Nitritionen in Lösung unter Verwendung einer Kupferelektrode, wobei das Verfahren **dadurch gekennzeichnet ist, dass** es in potentiostatischer Form realisiert wird, und dass es die Schritte umfasst, die darin bestehen:
i. Aufbringen eines ersten Potentials auf die Kupferelektrode, so dass die an der Oberfläche der Elektrode vorhandenen Kupferoxide zu metallischem Kupfer reduziert werden,
ii. Anlegen eines zweiten Potentials an die Kupferelektrode, so dass das metallische Kupfer, das bei dem Schritt i gebildet wird, oxidiert wird zu Kupferionen,
iii. Anlegen eines dritten Potentials an die Kupferelektrode, so dass die Kupferoxide, die gegebenenfalls bei Schritt ii gebildet wurden, reduziert werden,
wobei die Schritte i bis iii in einem Trägerelektrolyt realisiert werden, und
iv. Dosieren der Nitrat- und/oder Nitritionen einer zu analysierenden Lösung durch Eintauchen der Kupferelektrode, die bei Schritt iii erhalten wurde, in die zu analysierende Lösung, wobei ein viertes Potential an die Kupferelektrode angelegt wird, derart, dass die Nitrat- und/oder Nitritionen reduziert werden,
wobei der Trägerelektrolyt der Schritte i bis iii sowie die zu analysierende Lösung des Schritts iv einen im Wesentlichen neutralen pH-Wert aufweisen.

2. Verfahren nach Anspruch 1, **dadurch gekennzeichnet, dass** der Trägerelektrolyt der Schritte i bis iii die bei Schritt iv zu analysierende Lösung ist.

3. Verfahren nach Anspruch 1 oder 2, **dadurch gekennzeichnet, dass** das erste Potential kleiner oder gleich -0,85 V/ECS ist.

4. Verfahren nach einem beliebigen der vorhergehenden Ansprüche, **dadurch gekennzeichnet, dass** das zweite Potential größer als das Ruhepotential der Kupferelektrode ist.

5. Verfahren nach einem beliebigen der vorhergehenden Ansprüche, **dadurch gekennzeichnet, dass** das dritte Potential kleiner oder gleich -0,85 V/ECS ist.

6. Verfahren nach einem beliebigen der Ansprüche 1 bis 5, **dadurch gekennzeichnet, dass** das vierte Potential gleich -0,9 V/ECS ist.

7. Verfahren nach einem beliebigen der Ansprüche 1 bis 5, **dadurch gekennzeichnet, dass** das vierte Potential gleich -1,1 V/ECS ist.

8. Verfahren nach einem beliebigen der vorhergehenden Ansprüche, **dadurch gekennzeichnet, dass** die Schritte i bis iii vor jedem Dosierschritt iv wiederholt werden.

9. Verfahren nach einem beliebigen der vorhergehenden Ansprüche, **dadurch gekennzeichnet, dass** es außerdem einen Schritt v umfasst, der auf den Dosierschritt iv folgt, wobei der Schritt v darin besteht, die Kupferelektrode auf einem fünften Potential zu halten, wobei das fünfte Potential kleiner als das Ruhepotential der Kupferelektrode ist, derart, dass eine Oxidation der Kupferelektrode vermieden wird, wenn letztere während eines vorgegebenen Zeitraums nicht mehr für die Dosierung verwendet wird.

## Claims

1. Method for assaying nitrate and/or nitrite ions in solution using a copper electrode, said method being **characterised in that** it is carried out in potentiostatic mode and **in that** it comprises steps consisting in:
i. applying a first potential to the copper electrode so as to reduce the copper oxides present at the surface of the electrode to copper metal,
ii. applying a second potential to the copper electrode so as to oxidise the copper metal formed in step i to cupric ions,
iii. applying a third potential to the copper electrode so as to reduce the copper oxides which may be formed in step ii,
steps i and iii being carried out in a supporting electrolyte, and
iv. assaying the nitrate and/or nitrite ions of a solution to be analysed by immersing the copper electrode obtained in step iii in said solution to be analysed, while applying a fourth potential to the copper electrode so as to reduce the nitrate and/or nitrite ions,
the supporting electrolyte of steps i to iii as well as the solution to be analysed of step iv having a substantially neutral pH.

2. Method according to claim 1, **characterised in that** the supporting electrolyte of steps i to iii is the solution to be analysed of step iv.

3. Method according to claim 1 or 2, **characterised in that** the first potential is less than or equal to -0.85 V/SCE.

4. Method according to any one of the preceding claims, **characterised in that** the second potential is greater than the resting potential of the copper electrode.

5. Method according to any one of the preceding claims, **characterised in that** the third potential is less than or equal to -0.85 V/SCE.

6. Method according to any one of claims 1 to 5, **characterised in that** the fourth potential is equal to -0.9 V/SCE.

7. Method according to any one of claims 1 to 5, **characterised in that** the fourth potential is equal to -1.1 V/SCE.

8. Method according to any one of the preceding claims, **characterised in that** steps i to iii are repeated before each assaying step iv.

9. Method according to any one of the preceding claims, **characterised in that** it further comprises a step v following the assaying step iv, said step v consisting in maintaining the copper electrode at a fifth potential, said fifth potential being less than the resting potential of the copper electrode, so as to prevent the copper electrode from oxidising when it is no longer used for said assaying for a given period.
